# FASCICULE DE BREVET EUROPEEN

(11) **EP 2 552 764 B1**
(45) Date de publication et mention de la délivrance du brevet: **01.01.2014**
(21) Numéro de dépôt: 11712995.7
(22) Date de dépôt: 11.03.2011
(51) Int. Cl.: B62D 25/20, B60K 1/04, B60K 15/063, B60R 16/04, B62D 21/15

(54) **VEHICULE ET SUPPORT DE RESERVOIR D'ENERGIE ASSOCIE**
FAHRZEUG UND ZUGEHÖRIGE ENERGIERESERVOIRSTÜTZE
VEHICLE AND ASSOCIATED ENERGY RESERVOIR SUPPORT

(30) Priorité: 29.03.2010 FR 1052265
(43) Date de publication de la demande: 06.02.2013
(73) Titulaire: Renault S.A.S., 92100 Boulogne-Billancourt (FR)
(72) Inventeur: HETTINGER, Joël, F-92800 Puteaux (FR); FILLION, Thierry, F-78580 Bazemont (FR)
(86) Numéro de dépôt international: PCT/FR2011/050499
(87) Numéro de publication internationale: WO 2011/121202

(56) Documents cités:
- EP-A1- 0 435 197
- EP-A1- 2 133 259
- US-A1- 2003 047 932

## Description

L'invention concerne les véhicules comportant un réservoir d'énergie comprenant un système de dissipation d'énergie, appelé « pare-chocs », lors d'un choc dû à une collision entre le véhicule et un élément extérieur. Il peut s'agir par exemple de véhicules à propulsion électrique ou hybride.

Plus particulièrement l'invention concerne les véhicules comprenant un réservoir d'énergie, tel que des batteries, ou un réservoir de gaz ou de carburant situé sous le plancher du véhicule.

Aujourd'hui, les systèmes de pare-chocs sont montés de manière standard à l'avant et à l'arrière des véhicules afin d'absorber l'énergie de choc dégagée par des collisions entre le véhicule et un élément extérieur, de sorte que la structure porteuse du véhicule soit endommagée le moins possible.

Un système de pare-chocs se compose, en général, d'un composant, tel un absorbeur de choc, qui transforme l'énergie de choc en effort de déformation, et d'une traverse apte à transmettre à l'absorbeur de choc l'énergie résultant de l'impact. Ces systèmes de pare-chocs sont ajustés pour que l'absorbeur de choc soit situé aussi centralement que possible sur la poutre avant ou arrière et que l'énergie de choc soit transmise à l'absorbeur de choc, et par conséquent également à la poutre avant ou arrière.

Les systèmes de dissipation d'énergie doivent être continuellement réadaptés aux différentes normes en vigueur et aux différentes exigences liées à la conception de nouveaux véhicules. Notamment, lors de l'apparition des véhicules électriques et hybrides, des normes de protection des batteries sont apparues, afin de réduire les risques thermique et électrique des batteries lors d'un choc. L'implantation des batteries sous le plancher du véhicule nécessite de concevoir un système de dissipation d'énergie lors d'un choc latéral, afin de limiter l'endommagement des batteries. Le document EP A 0435 197 suggère un véhicule comprenant un support de réservoir d'énergie qui comporte les caractéristiques du préambule de la revendication indépendante 1.

L'objectif de l'invention est donc de fournir un véhicule comportant un réservoir d'énergie situé sous le plancher du véhicule, notamment un véhicule à propulsion électrique ou hybride comprenant un système de dissipation d'énergie optimisé latéralement, afin de minimiser les risques d'endommagement du réservoir d'énergie situé sous le plancher du véhicule.

Dans un mode de réalisation, l'invention concerne un véhicule comprenant un support de réservoir d'énergie, par exemple un ensemble de batteries, situé sous le plancher du véhicule. Le support de réservoir d'énergie est fixé entre les longerons latéraux du véhicule. Le longeron est une pièce du châssis du véhicule disposée dans le sens de la longueur du véhicule. Le véhicule possède sous ou sur son plancher deux longerons symétriques par rapport à l'axe de symétrie du véhicule.

Le véhicule comprend des moyens d'absorption d'un choc latéral aptes à s'insérer dans un espace situé sous le plancher du véhicule entre la carrosserie extérieure du véhicule et le réservoir d'énergie tel que des batteries. Les moyens d'absorption de chocs sont réalisés sous forme de structures déformables permettant de dissiper l'énergie du choc. La carrosserie extérieure du véhicule est communément appelée « bas volet » du véhicule.

Avantageusement, les moyens d'absorption du choc comprennent un absorbeur latéral principal et une plaque latérale situés de part et d'autre du support de réservoir d'énergie.

Par exemple, chaque plaque latérale est fixée sur le support de réservoir d'énergie et l'absorbeur latéral principal est situé entre chaque longeron et le support de réservoir d'énergie.

Les moyens d'absorption de choc peuvent comprendre au moins un absorbeur latéral secondaire situé entre la carrosserie extérieure du véhicule et l'absorbeur latéral principal.

Avantageusement, l'absorbeur secondaire est fixé sur chacune des plaques latérales.

Le véhicule comprend des moyens de rigidification du support de réservoir d'énergie. Ces moyens de rigidification comprennent au moins une traverse horizontale apte à se fixer sur chacun des absorbeurs latéraux principaux.

En outre la plaque latérale est apte à se fixer sur l'un des longerons et elle comprend une tôle de métal emboutie.

Les absorbeurs latéraux principaux et secondaires peuvent être réalisés en matière synthétique ou en matière métallique et peuvent présenter une structure capable de dissiper l'énergie en cas de choc, par exemple une structure alvéolaire.

Selon un second aspect, l'invention concerne un support de réservoir d'énergie apte à se fixer sous le plancher du véhicule.

Le support de réservoir d'énergie comprend des moyens d'absorption d'un choc latéral comportant une plaque latérale et un absorbeur latéral principal.

Avantageusement, les moyens d'absorption sont montés dans un espace situé sous le plancher du véhicule entre la carrosserie extérieure du véhicule et le réservoir d'énergie.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente une vue en coupe d'un véhicule selon l'invention ;
- la figure 2 représente une vue de dessus selon la coupe II-II ;
- la figure 3 représente une vue de coté selon la coupe III-III.

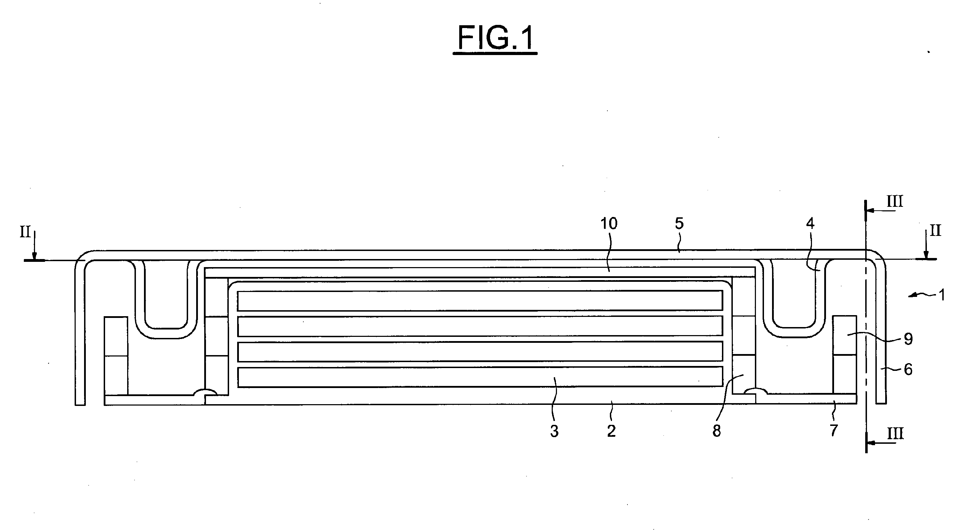

Le véhicule 1 représenté sur la figure 1 est par exemple un véhicule électrique ou hybride. Le châssis du véhicule 1 comprend un support 2 pour un réservoir d'énergie 3 qui est, dans l'exemple illustré, un ensemble de batteries électriques. Le support 2 est fixé sur des longerons latéraux 4 à l'aide, par exemple, de verrous (non représentés). Les longerons latéraux 4 correspondent à une pièce du châssis du véhicule disposée dans le sens de la longueur du véhicule. Le support 2 est situé sous le plancher 5 du véhicule 1.

Le véhicule 1 comprend des moyens d'absorption de l'énergie d'un choc latéral. Ces moyens d'absorption sont insérés dans un espace disponible entre les batteries 3 et la carrosserie 6 d'un véhicule.

Les moyens d'absorption de chocs comprennent une plaque latérale 7 située de part et d'autre du support 2. Les plaques latérales 7 peuvent, à titre d'exemple, être fixées par soudage au support 2. Ces plaques latérales 7 peuvent être réalisées en tôle de métal extrudé, par exemple en aluminium ou en acier afin d'améliorer l'absorption d'énergie Elles sont situées sous les longerons latéraux 4. Les plaques latérales 7 peuvent être, par exemple, fixées à la structure du véhicule par l'intermédiaire de visseries ou tout autre système de démontage et remontage rapide.

En outre, les moyens d'absorption de chocs comprennent un absorbeur latéral principal 8 situé de part et d'autre du support 2. Chaque absorbeur latéral principal 8 est situé entre chaque longeron 4 et le support 2.

Les moyens d'absorption de chocs comprennent également dans l'exemple illustré, deux absorbeurs latéraux secondaires 9 situés sur chacune des plaques latérales 7. Les absorbeurs latéraux secondaires 9 se situent entre la carrosserie extérieure 6 du véhicule et l'absorbeur latéral principal 8. Plus précisément ils peuvent être situés entre la carrosserie extérieure 6 et chacun des longerons 4. Toutefois, ces absorbeurs latéraux 9 peuvent être placés à des endroits différents en fonction du véhicule et de la place disponible entre le support 2 et la carrosserie extérieure 6 du véhicule. Les absorbeurs latéraux secondaires 9 peuvent être en nombre inférieur ou supérieur à deux, en fonction du besoin.

Les absorbeurs latéraux principaux 8 et secondaires 9 peuvent être, à titre d'exemple, réalisés en matière métallique tel que de l'acier ou de l'aluminium extrudé ou en matière synthétique telle que du polypropylène (PP) et peuvent présenter une structure capable de dissiper l'énergie en cas de choc, telle qu'une structure alvéolaire (de type nid d'abeille, par exemple), les alvéoles étant orientées selon une direction perpendiculaire aux longerons 4. Les dimensions des absorbeurs 8 et 9 dépendent de la longueur du support 2 et de la hauteur entre le sol et le plancher 5 du véhicule 1.

Le véhicule 1 peut comprendre des moyens de rigidification comprenant des traverses 10. Ces traverses 10 sont fixées à chacun des absorbeurs latéraux principaux 8 par des vis ou par tout autre moyen.

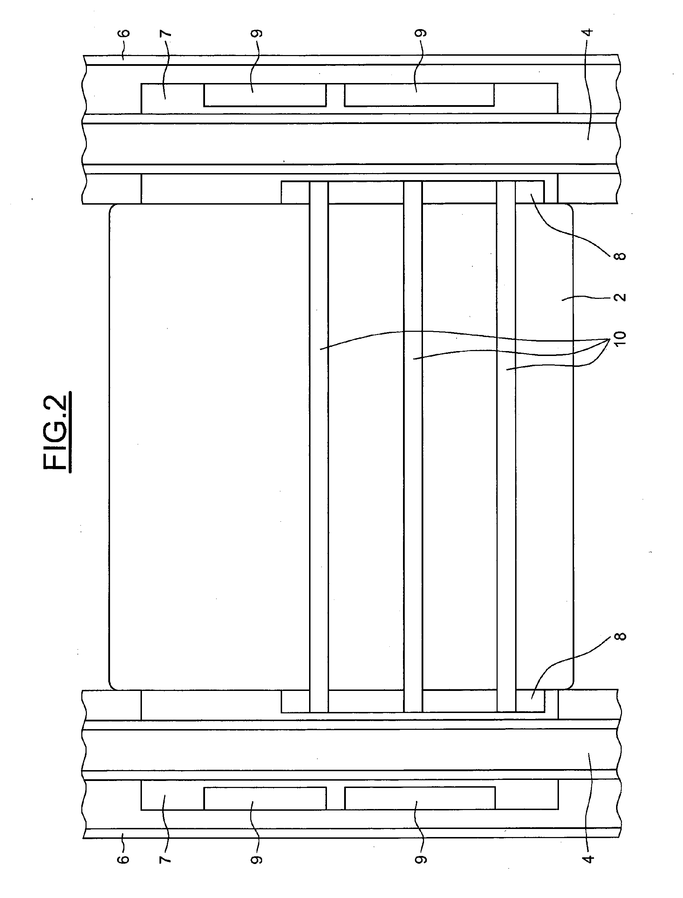

La figure 2 représente une vue de dessus du véhicule 1 selon la coupe II-II de la figure 1. Les traverses 10 sont, à titre d'exemple non limitatif, au nombre de trois. Le nombre des traverses 10 peut varier en fonction de leur épaisseur et de la nécessité à rigidifier le support 2.

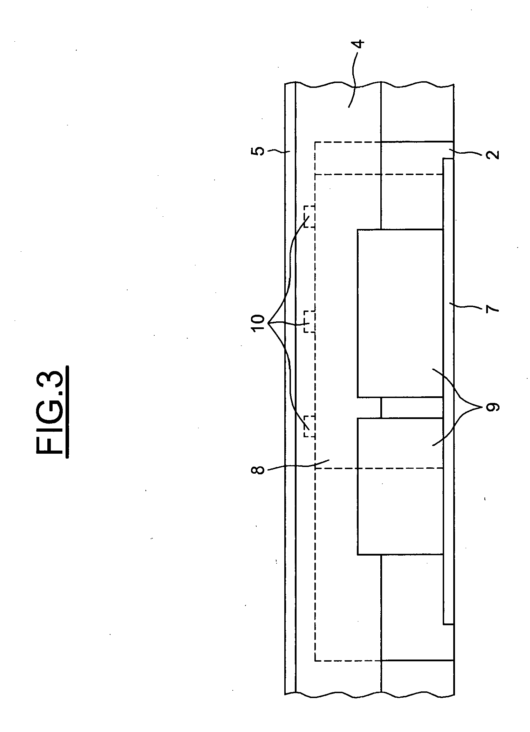

La figure 3 représente une vue de coté du véhicule 1 selon la coupe III-III de la figure 1.

Le système de dissipation d'énergie 1 est mis en place sur le support 2 à l'extérieur du véhicule 1, puis le support 2 est fixé sur les longerons 4, de façon à positionner les moyens d'absorption de chocs 7, 8 et 9 dans les espaces disponibles sous le plancher 5 du véhicule 1.

La position et les dimensions des moyens d'absorption de chocs peuvent être adaptées à chaque véhicule.

Ainsi, selon un deuxième mode de réalisation, l'absorbeur 9 pourrait être fixé non pas sur la plaque latérale 7 solidaire du support mais au contraire sur un élément de structure du véhicule, tel qu'un bavolet ou le longeron 4, par exemple. Il serait également possible de fixer l'absorbeur 8 sur le longeron 4. Un tel mode de réalisation présente l'avantage de réduire l'encombrement du réservoir d'énergie, et en particulier de la batterie, selon une direction transversale.

Grâce à l'invention qui vient d'être décrite, le réservoir d'énergie du véhicule et plus particulièrement, dans le cas d'un véhicule électrique ou hybride, la ou les batteries contenues dans un support de batteries sont protégées lors d'une collision latérale du véhicule. Lors de la collision, l'énergie du choc est transmise aux moyens d'absorption d'énergie et aux moyens de rigidification. Ces derniers sont alors comprimés par l'énergie du choc, de manière à protéger le réservoir d'énergie et à éviter le risque de détérioration, pouvant s'avérer dangereux.

Le mode de réalisation précédemment décrit et illustré sur les figures concerne un véhicule équipé de batteries montées sous le plancher. L'invention pourrait s'appliquer sans modification majeure à d'autres types de sources d'énergie situées sous le plancher telles que des réservoirs de gaz ou de carburant.

## Revendications

1. Véhicule, notamment véhicule électrique ou hybride, comprenant un support de réservoir d'énergie (2) situé sous le plancher (5) du véhicule, le support de réservoir d'énergie (2) étant fixé entre les longerons latéraux (4) du véhicule, **caractérisé en ce qu'**il comprend des moyens d'absorption (7, 8, 9) d'un choc latéral montés dans un espace situé sous le plancher (5) du véhicule entre la carrosserie extérieure (6) du véhicule et le réservoir d'énergie (3).

2. Véhicule selon la revendication 1, dans lequel les moyens d'absorption du choc comprennent un absorbeur latéral principal (8) et une plaque latérale (7) situés de part et d'autre du support de réservoir d'énergie (2).

3. Véhicule selon la revendication 2, dans lequel chaque plaque latérale (7) est fixée sur le support de réservoir d'énergie (2).

4. Véhicule selon l'une quelconque des revendications 2 ou 3, dans lequel l'absorbeur latéral principal (8) est situé entre chaque longeron (4) et le support de réservoir d'énergie (2).

5. Véhicule selon l'une quelconque des revendications 2 à 4, dans lequel les moyens d'absorption des chocs comprennent au moins un absorbeur latéral secondaire (9) situé entre la carrosserie extérieure (6) du véhicule et l'absorbeur latéral principal (8).

6. Véhicule selon la revendication 5, dans lequel un absorbeur latéral secondaire (9) est fixé sur chacune des plaques latérales (7).

7. Véhicule selon l'une quelconque des revendications 1 à 6, comprenant au moins une traverse horizontale (10) fixée par ses extrémités sur chacun des absorbeurs latéraux principaux (8).

8. Véhicule selon l'une quelconque des revendications 2 à 7, dans lequel la plaque latérale (7) est fixée sur l'un des longerons (4).

9. Véhicule selon l'une quelconque des revendications 2 à 8, dans lequel la plaque latérale (7) comprend une tôle de métal emboutie et les absorbeurs latéraux (8, 9) sont réalisés en une matière synthétique ou métallique et présentent une structure capable de dissiper l'énergie en cas de choc, par exemple une structure alvéolaire.

10. Support de réservoir d'énergie pour véhicule apte à se fixer sous le plancher (5) du véhicule, **caractérisé en ce qu'**il comprend des moyens d'absorption d'un choc latéral comportant une plaque latérale (7) et un absorbeur latéral principal (8) montés dans un espace situé sous le plancher (5) du véhicule entre la carrosserie (6) extérieure du véhicule et le réservoir d'énergie (3).

## Patentansprüche

1. Fahrzeug, insbesondere Elektro- oder Hybridfahrzeug, das einen Energiespeicherträger (2) umfasst, der sich unter dem Boden (5) des Fahrzeugs befindet, wobei der Energiespeicherträger (2) zwischen den seitlichen Längsträgern (4) des Fahrzeugs befestigt ist, **dadurch gekennzeichnet, dass** es Mittel (7, 8, 9) für die Absorption eines seitlichen Stoßes umfasst, die in einem Raum montiert sind, der sich unter dem Boden (5) des Fahrzeugs zwischen der äußeren Karosserie des Fahrzeugs (6) und dem Energiespeicher (3) befindet.

2. Fahrzeug nach Anspruch 1, wobei die Stoßabsorptionsmittel einen seitlichen Hauptabsorbierer (8) und eine seitliche Platte (7), die sich beiderseits des Energiespeicherträgers (2) befinden, umfassen.

3. Fahrzeug nach Anspruch 2, wobei jede seitliche Platte (7) an dem Energiespeicherträger (2) befestigt ist.

4. Fahrzeug nach einem der Ansprüche 2 oder 3, wobei der seitliche Hauptabsorbierer (8) zwischen jedem Längsträger (4) und dem Energiespeicherträger (2) befindet.

5. Fahrzeug nach einem der Ansprüche 2 bis 4, wobei die Stoßabsorptionsmittel wenigstens einen seitlichen Unterabsorbierer (9), der sich zwischen der äußeren Karosserie (6) des Fahrzeugs und dem seitlichen Hauptabsorbierer (8) befindet, umfassen.

6. Fahrzeug nach Anspruch 5, wobei der seitliche Unterabsorbierer (9) an jeder der seitlichen Platten (7) befestigt ist.

7. Fahrzeug nach einem der Ansprüche 1 bis 6, das wenigstens einen horizontalen Querträger (10) umfasst, der mit seinen Enden an jedem der seitlichen Hauptabsorbierer (8) befestigt ist.

8. Fahrzeug nach einem der Ansprüche 2 bis 7, wobei die seitliche Platte (7) an einem der Längsträger (4) befestigt ist.

9. Fahrzeug nach einem der Ansprüche 2 bis 8, wobei die seitliche Platte (7) ein gezogenes Metallblech umfasst und die seitlichen Absorbierer (8, 9) aus einem Kunststoff- oder Metallmaterial verwirklicht sind und eine Struktur, die im Fall eines Stoßes Energie abführen kann, beispielsweise eine Wabenstruktur, aufweisen.

10. Energiespeicherträger für Fahrzeug, der unter dem Boden (5) des Fahrzeugs befestigt sein kann, **dadurch gekennzeichnet, dass** er Mittel zum Absorbieren eines seitlichen Stoßes umfasst, die eine seitliche Platte (7) und einen seitlichen Hauptabsorbierer (8), die in einem Raum montiert sind, der sich unter dem Boden (5) des Fahrzeugs zwischen der äußeren Karosserie (6) des Fahrzeugs und dem Energiereservoir (3) befindet, umfassen.

## Claims

1. Vehicle, in particular an electric or hybrid vehicle, comprising an energy reservoir support (2) situated below the vehicle floor (5), the energy reservoir support (2) being fixed between the lateral side members (4) of the vehicle, **characterized in that** it comprises means (7, 8, 9) for absorbing a side impact which are mounted in a space situated below the vehicle floor (5) between the outer bodywork (6) of the vehicle and the energy reservoir (3).

2. Vehicle according to Claim 1, wherein the impact absorption means comprise a main lateral absorber (8) and a lateral plate (7) which are situated on either side of the energy reservoir support (2).

3. Vehicle according to Claim 2, wherein each lateral plate (7) is fixed to the energy reservoir support (2).

4. Vehicle according to either of Claims 2 and 3, wherein the main lateral absorber (8) is situated between each side member (4) and the energy reservoir support (2).

5. Vehicle according to any one of Claims 2 to 4, wherein the impact absorption means comprises at least one secondary lateral absorber (9) situated between the outer bodywork (6) of the vehicle and the main lateral absorber (8).

6. Vehicle according to Claim 5, wherein a secondary lateral absorber (9) is fixed to each of the lateral plates (7).

7. Vehicle according to any one of Claims 1 to 6, comprising at least one horizontal crossmember (10) fixed by its ends to each of the main lateral absorbers (8).

8. Vehicle according to any one of Claims 2 to 7, wherein the lateral plate (7) is fixed to one of the side members (4).

9. Vehicle according to any one of Claims 2 to 8, wherein which the lateral plate (7) comprises a stamped metal sheet, and the lateral absorbers (8, 9) are made of a synthetic or metallic material and have a structure capable of dissipating energy in the event of an impact, for example a cellular structure.

10. Energy reservoir support for a vehicle, able to be fixed below the vehicle floor (5), **characterized in that** it comprises means for absorbing a side impact comprising a lateral plate (7) and a main lateral absorber (8) which are mounted in a space situated below the vehicle floor (5) between the outer bodywork (6) of the vehicle and the energy reservoir (3).
